# EUROPÄISCHE PATENTSCHRIFT

(11) **EP 1 959 606 B1**
(45) Veröffentlichungstag und Bekanntmachung des Hinweises auf die Patenterteilung: **15.08.2012**
(21) Anmeldenummer: 07003042.4
(22) Anmeldetag: 13.02.2007
(51) Int. Cl.: H04L 9/00

(54) **Sicherheitseinheit**
Safety unit
Unité de protection

(43) Veröffentlichungstag der Anmeldung: 20.08.2008
(73) Patentinhaber: Secunet Security Networks Aktiengesellschaft, 45128 Essen (DE)
(72) Erfinder: Knechtel, Harry, Dipl. Inf., 86156 Augsburg (DE); Hofmann, Marco, Dipl. Inf., 81373 München (DE); Hettstedt, Gunnar, Dipl. Wirt. Ing., 85570 Markt Schwaben (DE); Lindlbauer, Marc, Dr., 80335 München (DE)
(74) Vertreter: Rohmann, Michael

(56) Entgegenhaltungen:
- DE-A1- 10 128 305
- DE-A1- 19 839 354
- DE-A1- 19 955 545
- DE-C1- 10 141 737
- US-A- 6 021 201
- US-A1- 2001 015 919

## Beschreibung

Die Erfindung betrifft eine Sicherheitseinheit für einen Kommunikationsverbund, z. B. eines Fahrzeuges, Flugzeuges, Schiffes oder dergleichen, wobei die Sicherheitseinheit zumindest ein als Hardwaremodul ausgebildetes Koordinationsmodul für die Koordination einzelner Module innerhalb der Sicherheitseinheit aufweist, wobei die Sicherheitseinheit zumindest ein als Hardwaremodul ausgebildetes Kryptografiemodul aufweist, mit dem kryptografische Schlüssel erzeugt, gespeichert, verwaltet und/oder verarbeitet werden, wobei die Sicherheitseinheit zumindest ein externes Kommunikationsmodul für die Kommunikation der Sicherheitseinheit mit einer oder mehreren nicht in den Kommunikationsverbund integrierten externen Einrichtungen aufweist und wobei die Sicherheitseinheit zumindest ein Programmiermodul aufweist, über welches die Sicherheitseinheit bzw. ein oder mehrere Module der Sicherheitseinheit, z. B. von einem externen System programmierbar sind. - Eine solche Einrichtung (z. B. ein Fahrzeug) weist üblicherweise eine Vielzahl elektrischer bzw. elektronischer Komponenten auf, die bzw. deren Steuereinheiten über ein Kommunikationsnetz miteinander verbunden sein und insoweit einen Kommunikationsverbund bilden können. Kommunikationsnetz meint im Rahmen der Erfindung insbesondere ein BUS-System, z. B. ein BUS-System in einem Automobil, einem Flugzeug, einem Schiff oder ein BUS-System bzw. Netzwerk für Maschinen in Fertigungsstraßen oder auch für fernadministrierte Anlagen. Derartige Einrichtungen (z. B. Kraftfahrzeuge), verfügen heutzutage über eine Vielzahl an Steuereinheiten, die als programmierbare Steuergeräte ausgebildet sein können und in immer höherem Maße mit ihrer Umwelt vernetzt sind. Aus diesem Grund gibt es Bemühungen, die Integrität und Authentizität von Daten solcher Steuergeräte sicherzustellen. Dabei ist es grundsätzlich bekannt, für die Sicherstellung der Integrität und Authentizität von Daten kryptografische Verfahren einzusetzen. In Fahrzeugen ist es bereits bekannt, kryptografisch geschützte Protokolle einzusetzen, um Daten in der Werkstatt und im Feld gesichert in die Fahrzeuge zu transportieren. Aus DE 101 28 305 A1 ist eine Steuereinheit bekannt, die über einen programmierbaren Speicher verfügt. Weiterhin verfügt die Steuereinheit gemäß DE 101 28 305 A1 über eine Kontrolleinrichtung, die die Authentizität von Daten überprüft, die in die Steuereinheit eingebracht werden sollen. Die insoweit bekannten Verfahren sind softwarebasiert und laufen auf Prozessoren, die keine oder nur unzureichende kryptografisch gesicherte Speicherbereiche besitzen. Ferner besitzen derartige Prozessoren nicht die notwendige Rechenleistung für komplexe kryptografische Protokolle und Rechenoperationen. Aus DE 199 55 545 A1 ist ein Steuersystem für Kraftfahrzeuge mit mehreren miteinander verbundenen Steuergeräten bekannt, wobei jeweils einem Steuergerät ein Kryptocontroller zugeordnet ist. In dem Steuersystem werden die Daten dann manipulationssicher und verschlüsselt zwischen den einzelnen Steuergeräten ausgetauscht.

Der Erfindung liegt daher die Aufgabe zugrunde, eine Sicherheitseinheit der eingangs beschriebenen Art, z. B. für ein Kraftfahrzeug oder dergleichen, zu schaffen, welche bei einwandfreier und schneller Funktion ein hohes Maß an Sicherheit gewährleistet.

Zur Lösung dieser Aufgabe lehrt die Erfindung eine Sicherheitseinheit (Secure Communication Unit) für z. B. ein Fahrzeug, Flugzeug, Schiff o. dgl., der eingangs genannten Art, die dadurch gekennzeichnet ist, dass das Koordinationsmodul im Falle einer Kompromittierung eines oder mehrerer Module das oder die kompromittierten Module gegen ein oder mehrere der übrigen Module abkapselt, dass über eine Schnittstelle mit dem Kryptografiemodul von einem anderen Modul empfangene Daten verschlüsselbar und/oder signierbar sind, dass mit dem Kryptografiemodul über die Schnittstelle von einem anderen Modul empfangene Daten entschlüsselbar und/oder Signaturen überprüfbar sind,
wobei die Sicherheitseinheit über zumindest ein Kommunikationsnetz mit mehreren Steuereinheiten des Kommunikationsverbundes verbunden oder verbindbar ist und wobei die Sicherheitseinheit zumindest ein internes Kommunikationsmodul für die Kommunikation der Sicherheitseinheit mit einer oder mehreren Steuereinheiten des Kommunikationsverbundes aufweist
und/oder
wobei die Sicherheitseinheit zumindest ein Prozessorkommunikationsmodul für die Kommunikation der Sicherheitseinheit mit zumindest einem externen Prozessor aufweist.

Das in die Sicherheitseinheit integrierte Kryptografiemodul erzeugt kryptografische Schlüssel, z. B. symmetrische oder asymmetrische Schlüssel. Erfindungsgemäß lassen sich über eine Schnittstelle von einem anderen Modul empfangene Daten verschlüsseln und/oder signieren. Außerdem lassen sich erfindungsgemäß mit Hilfe des Kryptografiemoduls über eine Schnittstelle von einem anderen Modul empfangene Daten entschlüsseln und/oder Signaturen überprüfen bzw. auswerten. Dabei weist die Sicherheitseinheit zumindest ein Koordinationsmodul für die Koordination und Kommunikation der einzelnen Module innerhalb der Sicherheitseinheit auf. Das Koordinationsmodul verwaltet die Hardware-Ressourcen, weist diese Ressourcen Anwendungen zu und stellt die Kommunikation zwischen den Modulen der Sicherheitseinheit sicher bzw. steuert die Module. In dieser Form stellt das Koordinationsmodul sicher, dass die einzelnen Module innerhalb der Sicherheitseinheit betrieben werden können, ohne sich dabei gegenseitig zu beeinflussen und dass erfindungsgemäß im Kompromittierungsfall das kompromittierte Modul auch gegen die restlichen, angeschlossenen Module abgekapselt wird. Die Authentifizierung erfolgt dabei über das Kryptografiemodul. Das Koordinationsmodul gewährleistet die Ausfallsicherheit der erfindungsgemäßen Sicherheitseinheit. Erfindungsgemäß ist die Sicherheitseinheit zumindest mit einem Programmiermodul ausgerüstet, über welches die Sicherheitseinheit bzw. ein oder mehrere Module der Sicherheitseinheit z. B. über ein externes System programmierbar sind. Das Kryptografiemodul ist erfindungsgemäß als Hardwaremodul ausgebildet. Erfindungsgemäß sind das Koordinationsmodul und/oder das Programmiermodul als Hardwaremodule ausgebildet.

Die erfindungsgemäße Sicherheitseinheit kann z. B. für einen Kommunikationsverbund, z. B. eines Fahrzeuges, Flugzeuges, Schiffes o. dgl. bestimmt sein, bzw. in einen solchen Kommunikationsverbund integriert werden. Ein solcher Kommunikationsverbund kann sich aus mehreren Steuereinheiten einzelner elektrischer bzw. elektronischer Komponenten zusammensetzen, die über ein Kommunikationsnetz, z. B. einen Bus, miteinander verbunden sind. Erfindungsgemäß ist die Sicherheitseinheit über dieses Kommunikationsnetz mit den übrigen Steuereinheiten verbunden. Erfindungsgemäß weist die Sicherheitseinheit ein internes Kommunikationsmodul für die Kommunikation der Sicherheitseinheit mit einer oder mehreren Steuereinheiten (Electronic Control Unit) des Kommunikationsverbundes auf. Dieses interne Kommunikationsmodul kann (optional) über das Programmiermodul nachgeladen werden.

Die Erfindung geht von der Erkenntnis aus, dass die Sicherheit innerhalb eines Kommunikationsverbundes, welcher eine Vielzahl von elektrischen bzw. elektronischen Einrichtungen mit entsprechenden Steuereinheiten aufweist, erheblich erhöht wird, wenn erfindungsgemäß in diesem Kommunikationsverbund eine Sicherheitseinheit integriert ist, welche ein Kryptografiemodul aufweist, das in Hardware, z. B. als ASIC oder FPGA realisiert ist. Die Kryptografieeinheit erzeugt und speichert kryptografisches Schlüsselmaterial auf sichere Art und Weise. Ferner erfolgt über das Kryptografiemodul eine sichere und schnelle Ausführung von kryptografischen Operationen sowie eine Speicherung von Daten. Das Koordinationsmodul sorgt für eine ausfallsichere und effiziente Verwaltung der beschriebenen Funktionen und für eine Kapselung der an das Kommunikationsmodul angeschlossenen Module im Falle der Kompromittierung eines Moduls, wobei die Kapselung gegen das kompromittierte Modul mittels Sperrung des Zugriffs zum Kommunikationsmodul erfolgt. Das Programmiermodul gewährleistet eine sichere Nachladbarkeit von Modulen, um eine Sicherheitseinheit an die Anforderungen verschiedener Einsatzumgebungen und z. B. Fahrzeughersteller anzupassen.

Die beschriebene Möglichkeit der Einbindung einer Sicherheitseinheit in einen Kommunikationsverbund stellt eine mögliche Ausführungsform der Erfindung dar. Die erfindungsgemäße Sicherheitseinheit kann jedoch auch alleine bzw. unabhängig von einem solchen Kommunikationsverbund und folglich im "Stand-Alone-Modus" betrieben werden. Damit ist im Rahmen der Erfindung gemeint, dass die Sicherheitseinheit nicht (direkt) über z. B. ein internes Kommunikationsmodul mit einem Kommunikationsverbund kommuniziert, sondern z. B. mit einem Prozessor, der selbst nicht Gegenstand der Sicherheitseinheit ist. Eine solche Kommunikation kann über das im Folgenden noch beschriebene Prozessorkommunikationsmodul erfolgen, das ebenfalls in die Sicherheitseinheit integriert sein kann.

In bevorzugter Ausführungsform besteht die Sicherheitseinheit folglich zumindest aus der in Hardware realisierten Kryptografieeinheit, dem in Hardware realisierten Koordinationsmodul, dem in Hardware realisierten Programmiermodul und dem internen Kommunikationsmodul, welches optional nach Autorisierung über die Kryptografieeinheit programmierbar ist.

Erfindungsgemäß weist die Sicherheitseinheit zumindest ein externes Kommunikationsmodul für die Kommunikation der Sicherheitseinheit mit einer oder mehreren externen Einrichtungen auf. Externe Einrichtung meint eine solche Einrichtung, die nicht in den Kommunikationsverbund integriert ist. Die Sicherheitseinheit stellt folglich für die Kommunikation mit Systemen außerhalb des Kommunikationsverbundes das (zusätzliche) externe Kommunikationsmodul zur Verfügung, welches nach Autorisierung über das Kryptografiemodul programmierbar ist.

Erfindungsgemäß weist die Sicherheitseinheit zumindest ein Prozessorkommunikationsmodul für die Kommunikation der Sicherheitseinheit mit zumindest einem externen Prozessor auf. Über dieses interne Prozessorkommunikationsmodul, welches nach Autorisierung über die Kryptografieeinheit programmierbar ist, kann folglich eine Anbindung der Sicherheitseinheit an einen weiteren Prozessor erfolgen. Ferner stellt die Sicherheitseinheit die Möglichkeit zur Verfügung, weitere Module nach Autorisierung über das Kryptografiemodul auf die Sicherheitseinheit zu laden und an das Koordinationsmodul anzumelden.

Das interne Kommunikationsmodul kann als Hardwaremodul oder auch als Softwaremodul ausgebildet sein. Außerdem besteht die Möglichkeit, dass das externe Kommunikationsmodul als Hardwaremodul oder Softwaremodul ausgebildet ist. Schließlich kann das Prozessorkommunikationsmodul als Hardwaremodul oder Softwaremodul ausgebildet sein.

Das interne Kommunikationsmodul, das externe Kommunikationsmodul, das Programmiermodul und/oder das Prozessorkommunikationsmodul stehen über das Koordinationsmodul mit der Kryptografieeinheit in Verbindung bzw. greifen über das Koordinationsmodul auf die Kryptografieeinheit zu.

Im Rahmen der Erfindung lässt sich folglich ein sicherer kryptografischer Vertrauensanker unter alleiniger Kontrolle z. B. eines Automobilherstellers im Fahrzeug erzeugen, welcher kryptografischen Verfahren und ihren Anwendungen die volle Wirksamkeit verleiht und die kryptografischen Operationen hinreichend schnell ausführen kann, um Sicherheit basierend auf kryptografischen Funktionen zu gewährleisten. Dabei wird die Sicherheit insbesondere auch in zeitkritischen Zuständen im Fahrzeug gewährleistet. Dabei kann es sich um schnelle Bandprozesse zur kosteneffektiven Produktion von Fahrzeugen, um schnelle Serviceprozesse zur Minimierung der Wartungskosten, um Fahrzeug-zu-Fahrzeug-Kommunikation, sowie um Onlinezugänge in das Fahrzeug handeln. Ferner geht die Erfindung von der Erkenntnis aus, dass z. B. im Bereich von Fahrzeugen, Flugzeugen und Schiffen besondere Anforderungen hinsichtlich der Einsatzumgebung zu berücksichtigen sind. Im Folgenden wird die Erfindung im Einzelnen anhand von lediglich ein Ausführungsbeispiel darstellenden Zeichnungen näher erläutert. Es zeigen
- Fig. 1: ein vereinfachtes Blockschaltbild eines Kommunikationsverbundes mit einer erfindungsgemäßen Sicherheitseinheit,
- Fig. 2: einen Ausschnitt aus dem Gegenstand nach Fig. 1 in schematischer Darstellung.

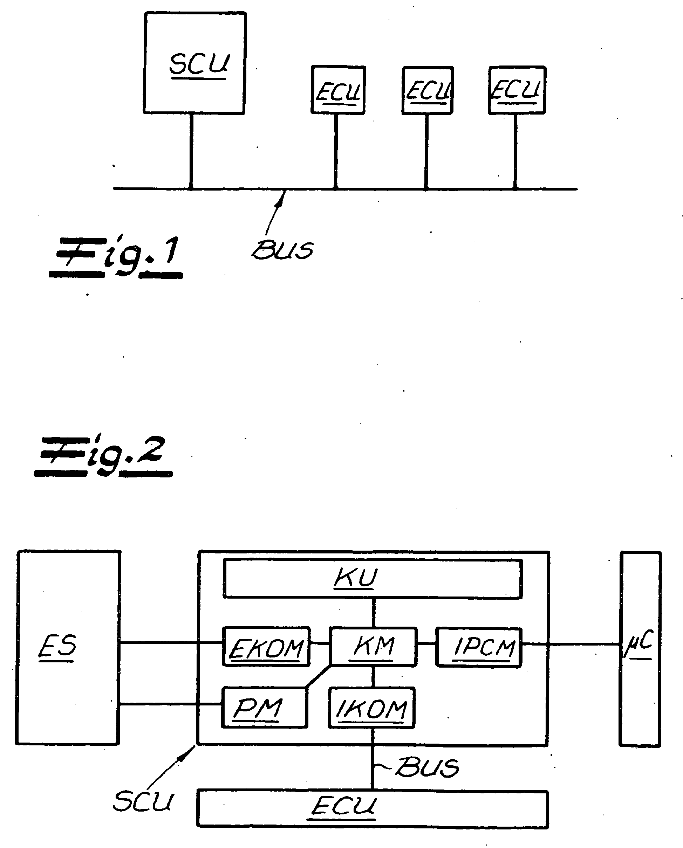

In den Figuren ist ein Kommunikationsverbund KV für eine Einrichtung dargestellt, welche eine Vielzahl elektrischer bzw. elektronischer Komponenten aufweist. Bei dieser Einrichtung kann es sich beispielsweise um ein Kraftfahrzeug handeln. Die einzelnen elektrischen oder elektronischen Komponenten weisen jeweils eine Steuereinheit ECU auf. Diese einzelnen Steuereinheiten ECU sind untereinander über ein Kommunikationsnetz BUS verbunden, welches im Ausführungsbeispiel als BUS-System ausgebildet ist. Bei einem solchen Fahrzeug-Bus kann es sich beispielsweise um einen CAN-Bus handeln. In dem dargestellten Ausführungsbeispiel ist nun in diesen Kommunikationsverbund KV eine Sicherheitseinheit SCU integriert, welche - wie auch die übrigen Steuereinheiten an das BUS-System angeschlossen ist. Dieses ist schematisch in Fig. 1 dargestellt. Die Sicherheitseinheit SCU kann jedoch auch alleine bzw. ohne den dargestellten Kommunikationsverbund betrieben werden, d. h. in einem "Stand-Alone-Modus".

Aufbau und Funktionsweise dieser erfindungsgemäßen Sicherheitseinheit SCU ergeben sich insbesondere aus Fig. 2.

Diese an den Fahrzeug-Bus angeschlossene Sicherheitseinheit SCU weist zunächst einmal ein Kryptografiemodul KU, ein Koordinationsmodul KM, ein Programmiermodul PM sowie ein internes Kommunikationsmodul IKOM auf. Jedenfalls das Kryptografiemodul KU, das Koordinationsmodul KM und das Programmiermodul PM sind in Hardware realisiert. Das interne Kommunikationsmodul IKOM ist optional vorgesehen, es kann z. B. über das Programmiermodul PM nachgeladen werden.

Ferner ist im Ausführungsbeispiel in die Sicherheitseinheit SCU ein externes Kommunikationsmodul EKOM sowie ein Prozessorkommunikationsmodul IPCM integriert.

Funktioneller Kern dieser Sicherheitseinheit SCU ist die als Hardwaremodul ausgebildete Kryptografieeinheit bzw. das Kryptografiemodul KU, mit welchem kryptografische Schlüssel erzeugt, gespeichert, verwaltet und/oder verarbeitet werden. Die Kryptografieeinheit KU stellt eine sichere Umgebung für die Erzeugung und Verwaltung von kryptografischen Schlüsselmaterial zur Verfügung. Ferner werden sichere Speicherbereiche zur Verfügung gestellt. Diese sicheren Speicherbereiche sind gegen unautorisiertes Lesen und Schreiben von beliebigen Daten, insbesondere aber kryptografischen Schlüsseln geschützt. Diese Speicherbereiche sind ferner hinsichtlich des Zugriffes und der Verwaltung der dort abgelegten Daten konfigurierbar. So lässt sich einstellen, ob diese Daten wieder exportierbar sind oder nur innerhalb der Sicherheitseinheit verwendet werden sollen.

Die Kryptografieeinheit KU ist dabei in der Lage, mittels interner Befehle der Sicherheitseinheit Zufallszahlen in konfigurierbarer Länge und/oder symmetrische Schlüssel in konfigurierbarer Länge und/oder asymmetrische Schlüssel in konfigurierbarer Länge zu erzeugen. Dabei weist die Kryptografieeinheit KU eine generische Schnittstelle auf. Außerdem sind konfigurierbare Algorithmen implementiert, d. h. das Kryptografiemodul KU kann über die Bedatung bezüglich der Algorithmen konfiguriert werden, wobei die generische Schnittstelle nach außen gleich bleibt. Auf diese Weise können beliebige Daten verschlüsselt bzw. symmetrisch oder asymmetrisch elektronisch signiert werden oder auch ein Fingerprint der Daten berechnet werden. Ferner besitzt die Kryptografieeinheit eine Schnittstelle, über welche sie an eine PKI (Public Key Infrastruktur) angebunden werden kann. Es lässt sich folglich wie erläutert ein asymmetrisches Schlüsselpaar sicher erzeugen und abspeichern und eine Zertifizierungsanfrage für diese PKI exportieren. Das Kryptografiemodul KU ist dabei in der Lage, Zertifizierungsanfragen zu exportieren und Zertifikate zu importieren. Ferner ist die Kryptografieeinheit KU in der Lage, Speicherbereiche außerhalb der Sicherheitseinheit SCU gegen Lese- und Schreibzugriffe von außerhalb der Sicherheitseinheit zu schützen. Mit Hilfe des Kryptografiemoduls KU werden elektronische Signaturen (symmetrisch und asymmetrisch) inklusive der ggf. zugehörigen Zertifikatskette überprüft. Außerdem kann die Kryptografieeinheit KU eine gesicherte Zeit zur Verfügung stellen. Da die Kryptografieeinheit KU als Hardwaremodul realisiert ist, ist gewährleistet, dass sie von außen nicht ohne Autorisierung programmierbar ist. Optional ist sie auch resistent gegen Hardwareattacken.

Das in Fig. 2 ebenfalls dargestellte Koordinationsmodul KM bildet neben dem Kryptografiemodul KU den sicherheitsrelevanten Kern und stellt sicher, dass die einzelnen Module zuverlässig innerhalb der Sicherheitseinheit betrieben werden, ohne das eine gegenseitige Beeinflussung erfolgt. Im Falle einer Kompromittierung kapselt das Koordinationsmodul KM das kompromittierte Modul gegen die restlichen, angeschlossenen Module ab. Auf diese Weise ist das Koordinationsmodul in seiner Funktion als zentrale SCU Kommunikationsschnittstelle in der Lage, die Kommunikation von/zum kompromittierten Modul zu unterbinden. Das Koordinationsmodul KM verwaltet die Hardwareressourcen der Sicherheitseinheit SCU und teilt diese den jeweiligen Modulen bzw. Anwendungen zu. Sofern benötigt stellt das Koordinationsmodul KM die Kommunikation zwischen den einzelnen Modulen der Sicherheitseinheit sicher.

Von Bedeutung ist im Rahmen der Erfindung ferner das (optionale) interne Kommunikationsmodul IKOM. Intern meint in diesem Zusammenhang, die Kommunikation innerhalb des Kommunikationsverbundes KV, d. h. die Kommunikation der Sicherheitseinheit SCU mit einzelnen Steuereinheiten ECU eines Kommunikationsverbundes. Diese Steuereinheiten ECU können Bestandteile z. B. entsprechender Fahrzeugkomponenten sein oder solchen Fahrzeugkomponenten zugeordnet sein. Das interne Kommunikationsmodul IKOM realisiert vorzugsweise die bidirektionale Kommunikation der Sicherheitseinheit SCU mit anderen Steuergeräten ECU des Kommunikationsverbundes KV. Verfügt eine Steuereinheit ECU selbst über eine entsprechende Sicherheitseinheit und sind folglich in einem Kommunikationsverbund mehrere Sicherheitseinheiten integriert, so ist zwischen diesen Sicherheitseinheiten ein authentischer und manipulationsgeschützter Datenaustausch über ein Protokoll möglich. Optional ist der Datenaustausch auch vertraulich. Dabei deutet Fig. 2 an, dass für die Anwendung kryptografischer Methoden das interne Kommunikationsmodul IKOM über das Koordinationsmodul KM auf die Kryptografieeinheit KU zugreift. Optional besteht die Möglichkeit, dass interne Kommunikationsmodul IKOM konfigurierbar auf gewisse Daten "lauscht", die innerhalb des Kommunikationsverbundes übertragen werden, wobei dann vorgesehen sein kann, dass diese Daten im sicheren Bereich des Kryptografiemoduls KU gespeichert werden.

Während das betriebene interne Kommunikationsmodul IKOM die Kommunikation innerhalb des Kommunikationsverbundes realisiert, ermöglicht das darüber hinaus vorgesehene externe Kommunikationsmodul EKOM eine Datenkommunikation zwischen der Sicherheitseinheit des Kommunikationsverbundes und einen externem System, z. B. einem außerhalb des Fahrzeuges bzw. nicht an den BUS angeschlossenen System. Bei einem solchen externen System ES kann es sich beispielsweise um eine Testeinrichtung oder auch einen zeitweise angeschlossenen Server handeln. Der Verbindungsaufbau erfolgt dabei authentisch, d. h. eine Verbindung kommt erst dann zu Stande, wenn das externe Kommunikationsmodul EKOM unter Zuhilfenahme des Kryptografiemoduls KU das externe System ES authentifiziert hat. Optional authentifiziert sich auch die Sicherheitseinheit SCU unter Zuhilfenahme des externen Kommunikationsmoduls EKOM gegenüber dem externen System ES. Ferner besteht optional die Möglichkeit, die übertragenen Daten ebenfalls authentisch und bei Bedarf verschlüsselt zu übertragen. Die Authentifizierung der Daten kann dabei auch an die Authentifizierung des Verbindungsaufbaus gekoppelt sein. Ferner besteht die Möglichkeit, dass das externe Kommunikationsmodul EKOM über einen oder mehrere Filter verfügt, die über die Weiterleitung von Daten entscheiden. Ein externes Kommunikationsmodul EKOM speichert die Authentisierungsdaten einer Verbindung.

Ein wesentlicher Bestandteil der erfindungsgemäßen Sicherheitseinheit ist ferner das in Fig. 2 dargestellte Programmiermodul PM. Über dieses ist der konfigurierbare Zugriff auf Speicherbereiche der Sicherheitseinheit möglich, so dass Module und Daten nachgeladen werden können. Der Programmierzugriff erfolgt authentifiziert über ein externes System ES. Dieses ist in Fig. 2 über die Verbindung zwischen dem externen System ES und dem Programmiermodul PM angedeutet, während das Programmiermodul PM dann seinerseits mit dem Koordinationsmodul KM und folglich über dieses Koordinationsmodul KM mit den übrigen Modulen der Sicherheitseinheit verbunden ist. Das Programmiermodul überprüft dabei die Authentizität und Integrität der nachgeladenen Module und Daten.

Schließlich ist in Fig. 2 angedeutet, dass die Sicherheitseinheit über ein (optionales) Prozessorkommunikationsmodul IPC verfügen kann, welches eine bidirektionale IPC-Kommunikation der Sicherheitseinheit SCU mit einem anderen Prozessor ermöglicht. Auf diese Weise stellt eine Sicherheitseinheit SCU einem anderen Prozessor µC über ein Protokoll die kryptografischen Dienste der Kryptografieeinheit KU zur Verfügung. Bei dem in Fig. 2 dargestellten Prozessor handelt es sich im Ausführungsbeispiel um einen Mikrokontroller µC.

In (nicht dargestellter) abgewandelter Ausführungsform kommuniziert die Sicherheitseinheit nicht (direkt) mit einem Kommunikationsverbund, sondern über z. B. das Prozessorkommunikationsmodul IPCM mit einem Prozessor, der dann ggf. Informationen/Daten weitergeben kann. In einem solchen Fall, der im Rahmen der Erfindung als "Stand-Alone-Modus" bezeichnet wird, kann ggf. auf das interne Kommunikationsmodul IKOM verzichtet werden.

## Patentansprüche

1. Sicherheitseinheit (SCU) für einen Kommunikationsverbund, z. B. eines Fahrzeuges, Flugzeuges, Schiffes oder dergleichen,
wobei die Sicherheitseinheit (SCU) zumindest ein als Hardwaremodul ausgebildetes Koordinationsmodul (KM) für die Koordination einzelner Module innerhalb der Sicherheitseinheit (SCU) aufweist,
wobei die Sicherheitseinheit (SCU) zumindest ein als Hardwaremodul ausgebildetes Kryptografiemodul (KU) aufweist, mit dem kryptografische Schlüssel erzeugt, gespeichert, verwaltet und/oder verarbeitet werden,
wobei die Sicherheitseinheit (SCU) zumindest ein externes Kommunikationsmodul (EKOM) für die Kommunikation der Sicherheitseinheit (SCU) mit einer oder mehreren nicht in den Kommunikationsverbund (KV) integrierten externen Einrichtungen (ES) aufweist,
wobei die Sicherheitseinheit (SCU) zumindest ein Programmiermodul (PM) aufweist, über welches die Sicherheitseinheit (SCU) bzw. ein oder mehrere Module der Sicherheitseinheit (SCU), z. B. von einem externen System (ES) programmierbar sind,
**dadurch gekennzeichnet,**
**dass** das Koordinationsmodul (KM) im Falle einer Kompromittierung eines oder mehrerer Module das oder die kompromittierten Module gegen ein oder mehrere der übrigen Module abkapselt,
**dass** über eine Schnittstelle mit dem Kryptografiemodul (KU) von einem anderen Modul empfangene Daten verschlüsselbar und/oder signierbar sind, dass mit dem Kryptografiemodul (KU) über die Schnittstelle von einem anderen Modul empfangene Daten entschlüsselbar und/oder Signaturen überprüfbar bzw. auswertbar sind,
wobei die Sicherheitseinheit (SCU) über zumindest ein Kommunikationsnetz (BUS) mit mehreren Steuereinheiten (ECU) des Kommunikationsverbundes (KV) verbunden oder verbindbar ist und wobei die Sicherheitseinheit (SCU) zumindest ein internes Kommunikationsmodul (IKOM) für die Kommunikation der Sicherheitseinheit (SCU) mit einer oder mehreren Steuereinheiten (ECU) des Kommunikationsverbundes (KV) aufweist
und/oder
wobei die Sicherheitseinheit (SCU) zumindest ein Prozessorkommunikationsmodul (IPCM) für die Kommunikation der Sicherheitseinheit (SCU) mit zumindest einem externen Prozessor (µC) aufweist.

2. Sicherheitseinheit nach Anspruch 1, **dadurch gekennzeichnet, dass** das Kommunikationsnetz als BUS-System (BUS) ausgebildet ist.

3. Sicherheitseinheit nach einem der Ansprüche 1 oder 2, **dadurch gekennzeichnet, dass** das Programmiermodul (PM) als Hardwaremodul ausgebildet ist.

4. Sicherheitseinheit nach einem der Ansprüche 1 bis 3, **dadurch gekennzeichnet, dass** das interne Kommunikationsmodul (IKOM), das externe Kommunikationsmodul (EKOM) und/oder das Prozessorkommunikationsmodul (IPCM) als Hardwaremodule und/oder Softwaremodule ausgebildet sind.

5. Sicherheitseinheit nach einem der Ansprüche 1 bis 4, **dadurch gekennzeichnet, dass** das interne Kommunikationsmodul (IKOM), das externe Kommunikationsmodul (EKOM), das Programmiermodul (PM) und/oder das Prozessorkommunikationsmodul (IPCM) über das Koordinationsmodul (KM) mit dem Kryptografiemodul (KU) kommunizieren bzw. auf das Kryptografiemodul (KU) zugreifen.

6. Kommunikationsverbund (KV) für eine oder mehrere elektrische bzw. elektronische Komponenten aufweisende Einrichtung, z. B. ein Fahrzeug, Flugzeug, Schiff o. dgl. mit mehreren über zumindest ein Kommunikationsnetz (BUS) miteinander verbundene Steuereinheiten (ECU), wobei an das Kommunikationsnetz (BUS) zumindest eine Sicherheitseinheit (SCU) nach einem der Ansprüche 1 bis 5 angeschlossen ist.

## Claims

1. A security unit (SCU) for a communications group of, for example, a vehicle, aeroplane, ship or the like,
wherein the security unit (SCU) comprises at least one coordination module (KM) implemented as a hardware module for coordinating individual modules within the security unit (SCU),
wherein the security unit (SCU) comprises at least one cryptographic module (KU) implemented as a hardware module for generating, storing, managing and/or processing cryptographic keys,
wherein the security unit (SCU) comprises at least one external communications module (EKOM) for the communication of the security unit (SCU) with one or more external facilities (ES) not integrated with the communications group (KV),
wherein the security unit (SCU) comprises at least one programming module (PM) via which the security unit (SCU) or one or more modules of the security unit (SCU) are programmable, for example, by an external system (ES),
**characterised in that**
the coordination module (KM) in case one or more modules are compromised, encapsulates the compromised module or modules against one or more of the remaining modules,
data received from another module via an interface with the cryptographic module (KU) are encodable and/or signable,
data received from another module via an interface with the cryptographic module (KU) are decipherable and/or signatures are checkable or evaluatable,
wherein the security unit (SCU) can be connected or is connectable via at least one communications network (BUS) with several control units (ECU) of the communications group (KV), and wherein the security unit (SCU) comprises at least one internal communications module (IKOM) for the communication of the security unit (SCU) with one or several control units (ECU) of the communications group (KV),
and/or
wherein the security unit (SCU) comprises at least one processor communications module (IPCM) for the communication of the security unit (SCU) with at least one external processor (µC).

2. Security unit (SCU) according to claim 1, **characterised in that** the communications network is implemented as a BUS system (BUS).

3. Security unit (SCU) according to claim 1 or 2, **characterised in that** the programming module (PM) is implemented as a hardware module.

4. Security unit (SCU) according to one of claims 1 to 3, **characterised in that** the internal communications module (IKOM), the external communications module (EKOM) and/or the processor communications module (IPCM) is implemented as a hardware module and/or a software module.

5. Security unit (SCU) according to one of claims 1 to 4, **characterised in that** the internal communications module (IKOM), the external communications module (EKOM), the programming module (PM) and/or the processor communications module (IPCM) communicate with or access the cryptographic module (KU) via the coordination module (KM).

6. A communications group (KV) for a facility comprising one or more electrical or electronic components, such as a vehicle, an aeroplane, a ship or the like, with several control units (ECU) connected with each other via at least one communications network (BUS), wherein at least one security unit (SCU) is connected to the communication network (BUS) according to one or claims 1 to 5.

## Revendications

1. Unité de sécurité (SCU) pour un ensemble de communication, par exemple d'un véhicule, d'un avion, d'un bateau ou similaire,
l'unité de sécurité (SCU) présentant au moins un module de coordination (KM) conçu sous forme de module de matériel, pour la coordination de modules individuels à l'intérieur de l'unité de sécurité (SCU),
l'unité de sécurité (SCU) présentant au moins un module de cryptographie (KU) conçu sous forme de module de matériel, qui permet de générer, mémoriser, gérer et/ou traiter des codes cryptographiques,
l'unité de sécurité (SCU) présentant au moins un module de communication externe (EKOM) pour la communication de l'unité de sécurité (SCU) avec un ou plusieurs équipements externes, non intégrés dans l'ensemble de communication (KV),
l'unité de sécurité (SCU) présentant au moins un module de programmation (PM), par lequel l'unité de sécurité (SCU) et/ou un ou plusieurs modules de l'unité de sécurité (SCU), sont programmables, par exemple par un système externe (ES),
**caractérisé**
**en ce que** le module de coordination (KM) décapsule dans le cas d'une compromission d'un ou de plusieurs modules le ou les modules compromis par rapport à un ou plusieurs des modules restants,
**en ce que** des données reçues d'un autre module peuvent être décodées et/ou signées au moyen d'une interface avec le module de cryptographie (KU),
**en ce que** des données reçues d'un autre module de cryptographie (KU) peuvent être décodées avec le module de cryptographie (KV) par l'interface et/ou des signatures peuvent être contrôlées et analysées,
l'unité de sécurité (SCU) étant reliée ou pouvant être reliée par au moins un réseau de communication (BUS) avec plusieurs unités de commande (ECU) de l'ensemble de communication (KV) et l'unité de sécurité (SCU) présentant au moins un module de communication interne (IKOM) pour la communication de l'unité de sécurité (SCU) avec une ou plusieurs unités de commande (ECU) de l'ensemble de communication (KV)
et/ou
l'unité de sécurité (SCU) présentant au moins un module de communication de processeur (IPCM) pour la communication de l'unité de sécurité (SCU) avec au moins un processeur externe (µC).

2. Unité de sécurité selon la revendication 1, **caractérisée en ce que** le réseau de communication est conçu sous forme de système de bus (BUS).

3. Unité de sécurité selon l'une des revendications 1 ou 2, **caractérisée en ce que** le module de programmation (PM) est conçu sous forme de module de matériel.

4. Unité de sécurité selon l'une des revendications 1 à 3, **caractérisée en ce que** le module de communication interne (IKOM), le module de communication externe (EKOM) et/ou le module de communication de processeur (IPCM) sont conçus sous forme de modules de matériel et/ou de modules de logiciel.

5. Unité de sécurité selon l'une des revendications 1 à 4, **caractérisée en ce que** le module de communication interne (IKOM), le module de communication externe (EKOM), le module de programmation (PM) et/ou le module de communication de processeur (IPCM) communiquent par le module de coordination (KM) avec le module de cryptographie (KU) et/ou ont recours au module de cryptographie (KU).

6. Ensemble de communication (KV) pour un ou plusieurs dispositifs présentant des composants électriques ou électroniques, par exemple un véhicule, un avion, un bateau ou similaires avec plusieurs unités de commande (ECU) reliées les unes aux autres par au moins un réseau de communication (BUS), au moins une unité de sécurité (SCU) selon l'une des revendications 1 à 5 étant raccordée au réseau de communication (BUS).
